(19) Europäisches Patentamt
European Patent Office
Office européen des brevets

(11) **EP 1 447 648 B1**

(12) **EUROPEAN PATENT SPECIFICATION**

(45) Date of publication and mention
of the grant of the patent:
**01.07.2015   Bulletin 2015/27**

(51) Int Cl.:
***G01D 5/347*** *(2006.01)*

(21) Application number: **04250774.9**

(22) Date of filing: **12.02.2004**

(54) **Optical Encoder**

Optischer Kodierer

Codeur optique

(84) Designated Contracting States:
**AT BE BG CH CY CZ DE DK EE ES FI FR GB GR HU IE IT LI LU MC NL PT RO SE SI SK TR**

(30) Priority:   **12.02.2003   JP 2003034284**

(43) Date of publication of application:
**18.08.2004   Bulletin 2004/34**

(73) Proprietor: **Mitutoyo Corporation**
**Kawasaki-shi, Kanagawa-ken 213-0012 (JP)**

(72) Inventors:
• **Shimomura, Toshitaka**
**Utsunomiya-shi,**
**Tochigi 321-3231 (JP)**
• **Nihommori, Shingo**
**Kawasaki-shi,**
**Kanagawa 213-0012 (JP)**

(74) Representative: **Skone James, Robert Edmund**
**Gill Jennings & Every LLP**
**The Broadgate Tower**
**20 Primrose Street**
**London EC2A 2ES (GB)**

(56) References cited:
**DE-A- 1 523 231        DE-A- 3 703 327**
**DE-A- 4 226 683        DE-A- 10 304 854**
**DE-A1- 3 816 675       JP-A- S63 250 522**
**US-A- 4 733 968        US-A- 5 751 492**
**US-B1- 6 259 111**

EP 1 447 648 B1

**Description**

The present invention relates to a photoelectric encoder in which a bright/dark pattern obtained by at least a grating on a main scale is detected by a light receiving portion which has an index grating and a light receiving element and can move relative to the main scale. Further, the present invention relates to a photoelectric encoder in which the bright/dark pattern is detected by a light receiving element array having an index grating and a light receiving element which are integrated with each other, in place of the light receiving portion with the index grating and the light receiving element. The bright/dark pattern canbe set by designing an optical system so as to be an interference pattern or an image of the main scale.

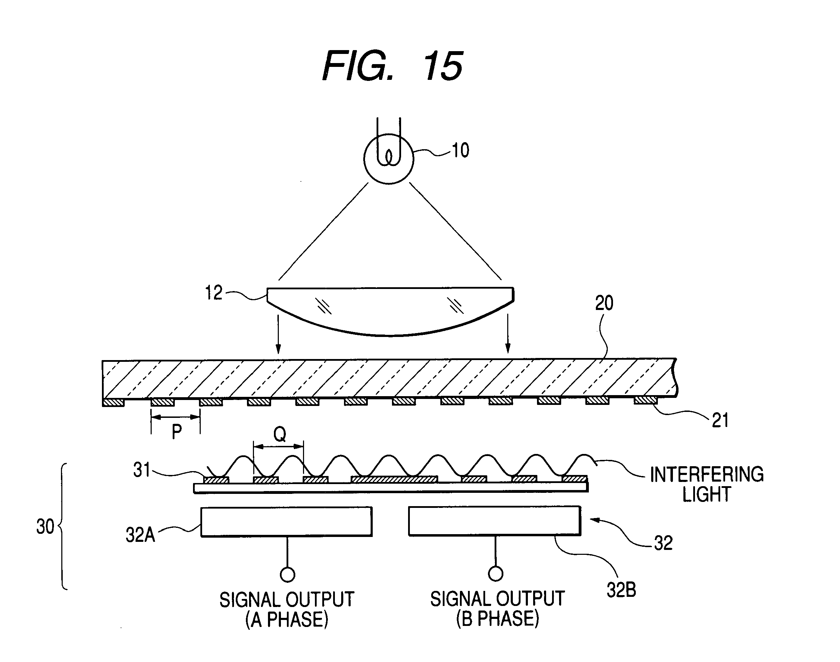

In the related-art, a transmission-type photoelectric encoder as shown by Fig. 15 has beenused. The transmission-type photoelectric encoder as shown in Fig. 15 includes a light source 10, a collimator lens 12, a transmission-type main scale 20 and a light receiving portion 30. The collimator lens 12 forms the light emitted from the light source 10 into parallel ray. The transmission-type main scale 20 has a first grating 21 having a predetermined pitch P at a surface (lower face in the drawing) thereof. The light receiving portion 30 includes an index grating 31 having a predetermined pitch Q and a light receiving element 32.

In the transmission-type photoelectric encoder of Fig. 15, since the index grating 31 and the light receiving element 32 are formed as individual parts, the individual parts need to be assembled to form the light receiving portion. Further, a plurality of light receiving elements 32A, 32B are needed for discriminating directions thereof (A phase, B phase) and the light elements need to be selected for obtaining uniformly optical sensitive characteristics and temperature characteristics thereof.

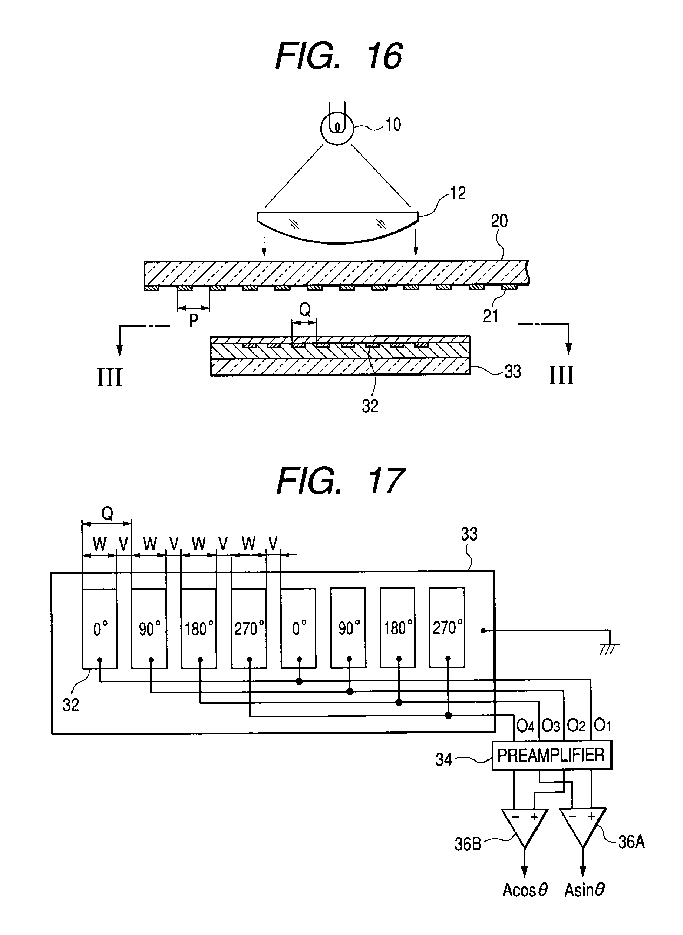

To solve such a problem, as described in Japanese Publication JP-B-2610624, there is proposed a transmission-type photoelectric encoder using a light receiving element array 33 as the light receiving portion, as shown by Fig. 16 (front view) and Fig. 17 (plane view taken along a line III-III of Fig. 16). That is, the light receiving element array 33 includes an index grating having the predetermined pitch Q and a light receiving element 32, which are integrated with each other. In Fig. 17, numeral 34 designates a preamplifier and numeral 36A, 36B designate differential amplifiers.

By adopting such a light receiving element array 33, there are achieved a number of advantages of promoting small-sized formation and signal stability.

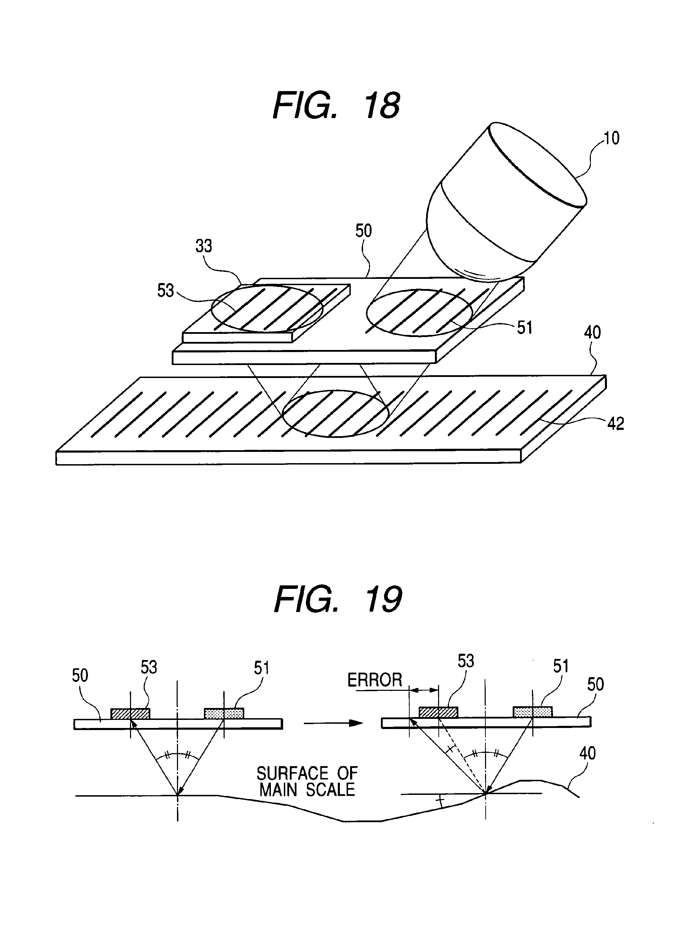

Further, in a reflection-type photoelectric encoder, as described in JP-B-60-23282, there is a reflection-type photoelectric encoder utilizing a three-grating system, as shown in Fig. 18. That is, the reflection-type photoelectric encoder includes a first grating 51 on an index scale 50, a second grating 42 on a reflection-type main scale 40, and a third grating (index grating) 53 on the index scale 50. A bright/dark pattern obtained by the two gratings (the first grating 51 and the second grating 42) is changed by moving the gratings relative to each other. The bright/dark pattern is filtered by the third grating 53 to thereby detect a relative movement amount of the main scale 20 and the index scale 50. This reflection-type photoelectric encoder can obtain the above-described advantages by using the light receiving element array 33 (arranged to face the main scale 40 in Fig. 18) as the light receiving portion.

However, the grating pitch Q on the light receiving side is determined by the grating pitch P of the main scale 20, 40. Therefore, in order to use a main scale having a grating pitch different from the pitch P, the light receiving portion needs to remake or be replaced with new one in accordance with the corresponding main scale. Further, the bright/dark pattern is obtained only at a distance from the surface of the grating 21, 42 of the main scale 20, 40, which is determined by the grating pitch P and an optical wavelength $\lambda$. Therefore, there poses a problem that in the case of varying a gap between the main scale and the light receiving portion, a signal output of the light receiving portion decreases regardless of whether the light receiving array 33 is adopted or not.

Further, according to the encoder utilizing a three-grating system, as shown by Fig. 18, normally, the second grating 42 is formed on the main scale 40. Therefore, as shown by Fig. 19, when there is present a waviness at the surface of the main scale 40, there poses a problem of bringing about a measurement error by influence of a change in a reflected angle of light.

The invention has been carried out in order to resolve the problem of the related art. It is an object of the present invention to provide a photoelectric encoder capable of using main scales having different pitches while adopting one kind of a light receiving portion, and having a simple structure.

In order to accomplish the object above, the following means are adopted. According to the present invention, there is provided a photoelectric encoder comprising:

a main scale with a grating;
a light receiving portion with an index grating and a light receiving element, the light receiving portion capable move relative to the main scale, the light receiving portion detecting a bright/dark pattern obtained at least by the grating of the main scale; and
a lens disposed between the main scale and the light receiving portion,
wherein a magnification of an image is set by adjusting distances among the lens, the main scale and the light receiving portion, and characterised in that:

the lens is a lens array comprising a plurality of lenses; and
the photoelectric encoder further comprises:

an aperture array comprising a plurality of apertures disposed at a position of a focal point of the lens.

The bright/dark pattern can be set by designing an optical system so as to be interference pattern or an image of the main scale.

Further, in order to simplify the structure of the light receiving portion, in the photoelectric encoder, the light receiving portion may be a light receiving element array in which the index grating and the light receiving element are integrated with each other.

Further, in order to prevent incidence of stray light from an adjacent lens of the lens array, the photoelectric encoder may further comprising:

a partition plate between the adjacent lenses of the lens array.

Further, an influence of the waviness of a surface of the scale is reduced when the main scale is of a reflecting .type.

Further, the structure is simplified by using a diffused light source and using a collimator lens as the lens.

Particularly, since the aperture is inserted between the main scale and the light receiving portion, an influence of a variation in a gap between the main scale and the light receiving portion can be reduced and a signal excellent in stability can be provided.

Further, in the case of using the reflection-type main scale, an influence of a waviness of the scale can be reduced.

Further, according to the present invention, there is also provided a photoelectric encoder comprising:

a main scale with a grating;
a light receiving portion with an index grating and a light receiving element, the light receiving portion capable move relative to the main scale, the light receiving portion detecting a bright/dark pattern obtained at least by the grating of the main scale; and
an aperture array disposed between the main scale and the light receiving portion,
wherein a magnification of an image is set by adjusting distances among the aperture array, the main scale and the light receiving portion.

Further, in order to simplify the structure of the light receiving portion, in the photoelectric encoder, the light receiving portion may be a light receiving element array in which the index grating and the light receiving element are integrated with each other.

According to the present invention, scales having different grating pitches can be used for one kind of the light receiving portion.

Further, when the lens is omitted, the cost can be reduced the small-sized formation can be achieved, and the magnification can freely be set.

**Brief Description of the Drawings**

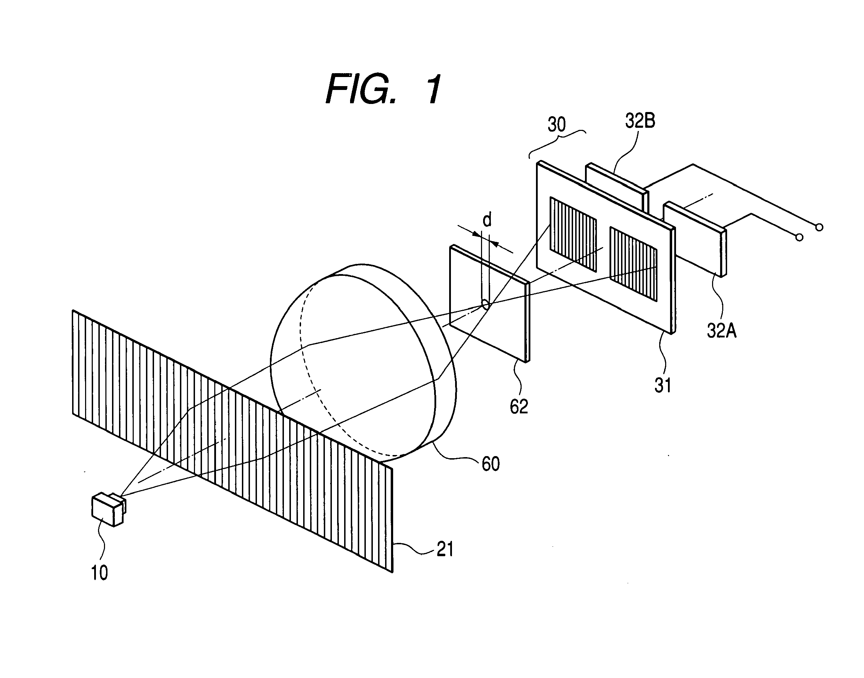

Fig. 1 is a perspective view showing a structure of an essential portion of a transmission-type photoelectric encoder;
Fig. 2 is an optical path view showing an optical system of the transmission-type photoelectric encoder
Fig. 3 is an optical path view showing an optical system of a transmission-type photoelectric encoder using a light receiving element array;
Fig. 4 is a diagram showing a relationship between a focal length and a lens diameter of a flat/convex lens;
Fig. 5 is an optical path view showing an optical system of a transmission-type photoelectric encoder of an embodiment according to the present invention using a lens array;
Fig: 6 is an optical path view showing an optical system of a transmission-type photoelectric encoder of an embodiment according to the present invention using a light receiving element array and a lens array;
Fig. 7 is an optical path view showing an optical system of a transmission-type photoelectric encoder of an embodiment according to the present invention using partition plates arranged between lenses of a lens array;
Fig. 8 is an optical path view showing an optical system of a transmission-type photoelectric encoder which does not use an aperture;

Fig. 9 is an optical path view showing an optical system of a reflection-type photoelectric encoder using a reflection-type main scale;

Fig. 10 is an explanatory view explaining that the optical system is not varied by a change in an angle by a waviness of the scale;

Fig. 11 is a perspective view of a reflection-type photoelectric encoder using a beam splitter;

Fig. 12 is an optical path view showing an optical system of a reflection-type photoelectric encoder using a diffused light source;

Fig. 13 is an optical path view showing an optical system of a transmission-type photoelectric encoder of an embodiment of the present invention omitting a lens; and

Fig. 14 is an optical path view showing an optical system of a.transmission-type photoelectric encoder of an embodiment according to the present invention using a light receiving element array and omitting a lens;

Fig. 15 is a front view showing a structure of an example of a transmission-type photoelectric encoder of a related-art;

Fig. 16 is a front view showing a structure of an example of a transmission-type photoelectric encoder of the related-art using a light receiving element array;

Fig. 17 is plane view of the light receiving element array taken along a line III-III of Fig. 16;

Fig. 18 is a perspective view showing a structure of an example of a reflection-type photoelectric encoder of the related-art utilizing a three-grating system; and

Fig. 19 is an outline front view for explaining a problem of the example of the related art of Fig. 18.

A detailed explanation will be given of the invention in reference to the drawings as follows.

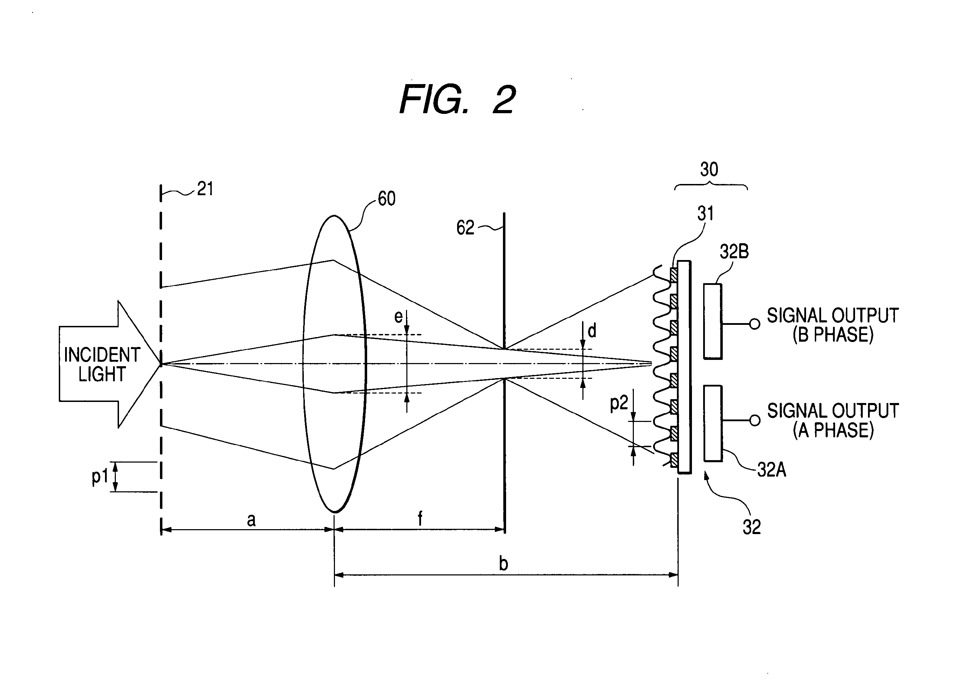

According to the present invention, in a transmission-type photoelectric encoder similar to that in the related art shown in Fig. 15, as shownby Fig . 1 (perspective view) and Fig. 2 (optical path view), a light source is constituted by a light source 10. Further, a lens 60 and an aperture 62 are inserted between the first grating 21 of the main scale 20 and the light receiving portion 30 and a magnification of an image is set by adjusting distances a, b between the lens 60 and the first grating 21 and between the lens 60 and the index grating 31.

Light emitted from the light source 10 passes through the first grating of the main scale 20 and is incident on the lens 60. Only light emitted from the lens 60 along an optical axis passing through the aperture 62 provided at a focal point of the lens 60 reaches the index grating 31 to form an image of the first grating 21.

Here, the magnification is calculated from a relationship between a pitch p1 of the main scale 20 and a pitch p2 of the image on the index grating 31 as follows.

$$M = p2/p1 = b/a \qquad \cdots \quad (1)$$

Further, in order to provide the image, intervals among the respective devices are determined to satisfy the following equation.

$$1/f = (1/a) + (1/b) \qquad \cdots \quad (2)$$

Here, f: focal length of the lens. For example, the intervals are determined as shown by Table 1.

[Table 1]

|  | Example 1 | Example 2 |
|---|---|---|
| Pitch of main scale: p1 | $20\mu m$ | $10\mu m$ |
| Pitch of index grating: p2 | $20\mu m$ | |
| Magnification: M | 1 | 2 |
| Focal length of lens: f | 3mm | |
| Distance btw. scale and lens: a | 6mm | 4.5mm |
| Distance btw. lens and index grating: b | 6mm | 9mm |
| N.A. by Equation (4) (DOF=$100\mu m$) | 0.066 | |

A gap variation characteristic of such an encoder structure is significantly related to a focal depth DOF of a lens optical system, and the larger the focal depth DOF, the wider the gap variation allowable range. The focal depth DOF is represented by Equation (3) as follows.

$$DOF = \lambda / (2 \times N.A.^2) \quad \cdots \quad (3)$$

Here, $\lambda$: light source wavelength.

The focal depth DOF, that is, the air gap variation allowable range has values respectively suitable for intended purposes of the encoder, and thus, N.A: may be specified to correspond to the intended purposes of the encoder. Therefore, the following inequality is established.

$$DOF < \lambda / (2 \times N.A.^2)$$

$$N.A. < \sqrt{\{\lambda / (2 \times DOF)\}} \quad \cdots \quad (4)$$

Here, when $100\mu m$ is needed as the focal depth DOF, N.A. needs to be smaller than the value calculated by Equation (4). Here, the light source wavelength $\lambda$ is set to 880nm.

$$N.A. < \sqrt{\{\lambda / (2 \times DOF)\}}$$

$$= \sqrt{\{880nm / (2 \times 100\mu m)\}}$$

$$= 0.066$$

Meanwhile, N.A. of the optical system is calculated by Equation (5) as follows.

$$N.A. = (1/2) \times (e/a)$$

$$= (1/2) \times d / (b - f) \times M$$

$$= d / (2 \times f) \quad \cdots \quad (5)$$

Here, d: aperture size,
e: beam diameter of lens.

In this way, the light receiving portion having the index grating pitch p2 of $20\mu m$ can respectively correspond to the main scale pitch p1 of $10\mu m$ and $20\mu m$.

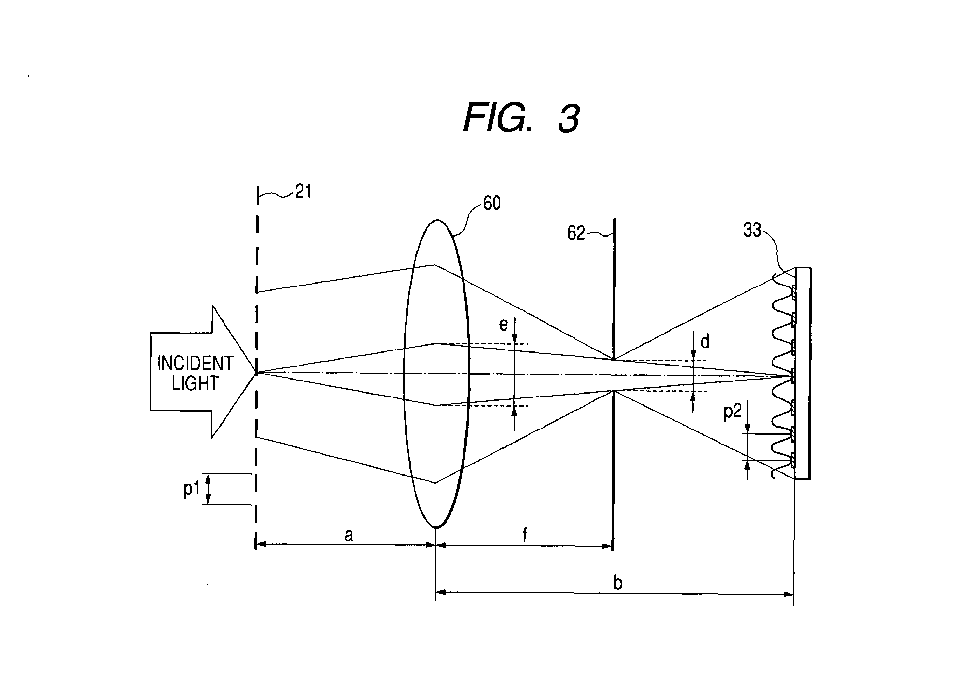

Further, the light receiving portion 30 can be replaced by the light receiving element array 33 similar to that in Fig. 16, as shown by Fig. 3.

Although there is only one optical axis, an explanation will be given of a structure for detecting by an optical system comprising a plurality of optical axes by using a lens array and an aperture array as follows.

As described above, the focal length of the lens is 3mm and therefore, a distance connecting the main scale, the lens and the index grating falls in a range of 12 through 13.5mm. In order to promote further small-sized formation, the focal length of the lens needs to be reduced.

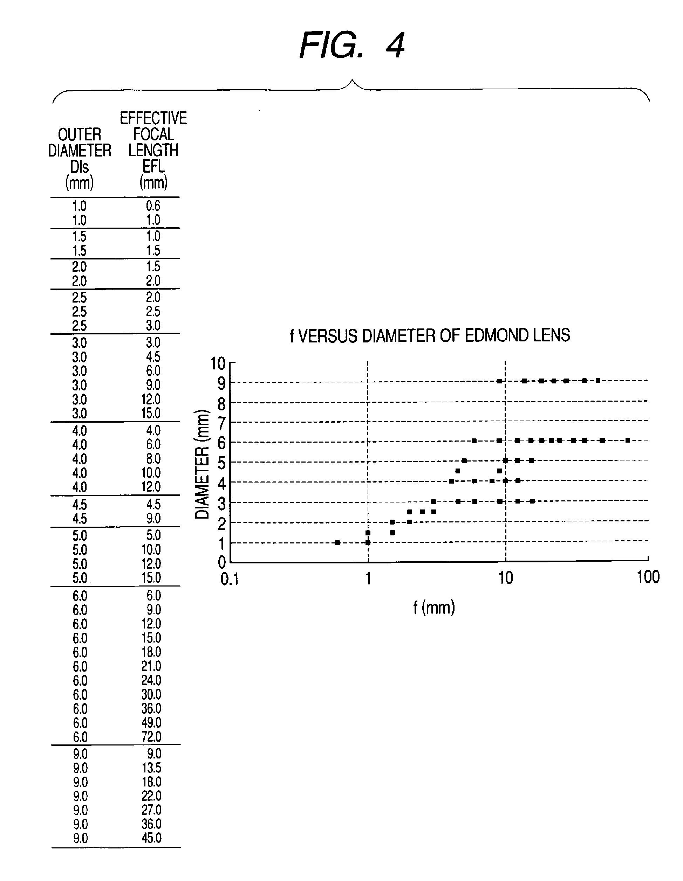

However, when the focal length of the lens is reduced, in the case of a general lens which people can easily obtain, a diameter thereof is reduced (Fig. 4 shows a list of flat/convex lenses dealt with by Edmond Optics Japan Co Ltd. and a diagram showing a relationship between the focal length f and the diameter of the lens). When the diameter of the lens is reduced, a detectable field of view on the main scale is narrowed.

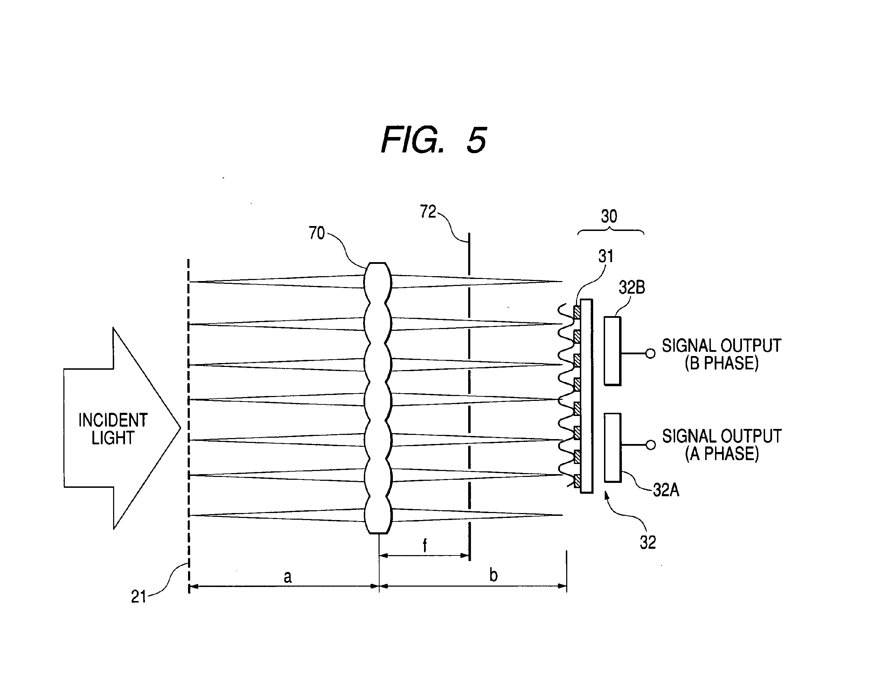

Hence, Fig. 5 shows an embodiment using a lens array 70 and an aperture array 72. In Fig. 5, a method of determining distances among the first grating 21 of the main scale, the lens array 70, the aperture array 72 and the index grating 31 is the same as shown by, for example, Table 2.

[Table 2]

|  | Example 3 | Example 4 |
|---|---|---|
| Pitch of main scale: p1 | $20\mu$m | $10\mu$m |
| Pitch of index grating: p2 | $20\mu$m | |
| Magnification: M | 1 | 2 |
| Focal length of lens: f | 0.6mm | |
| Distance btw. scale and lens: a | 1.2mm | 0.9mm |
| Distance btw. lens and index grating: b | 1.2mm | 1.8mm |
| N.A. by Equation (4) (DOF=$100\mu$m) | 0.066 | |

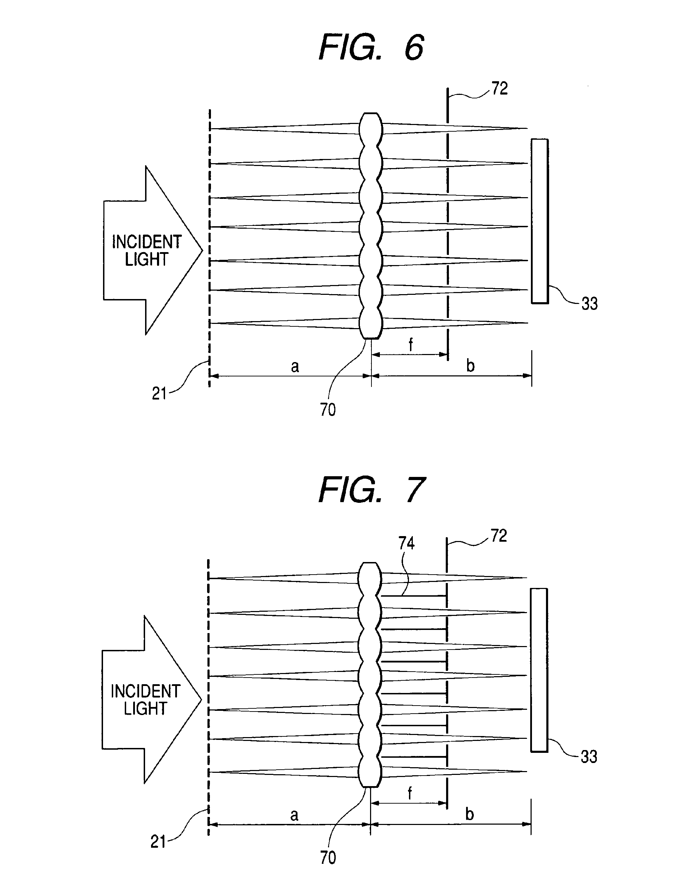

Fig. 6 shows an embodiment in which the light receiving portion 30 is changed to the light receiving element array 33.

In the case of using the lens array, there is a possibility that stray light from a adj acent lens of the lens array is incident on a lens. Hence, as in a fifth embodiment shown in Fig. 7, stray light can be prevented by providing a partition plate 74 between the lens array 70 and the aperture array 72.

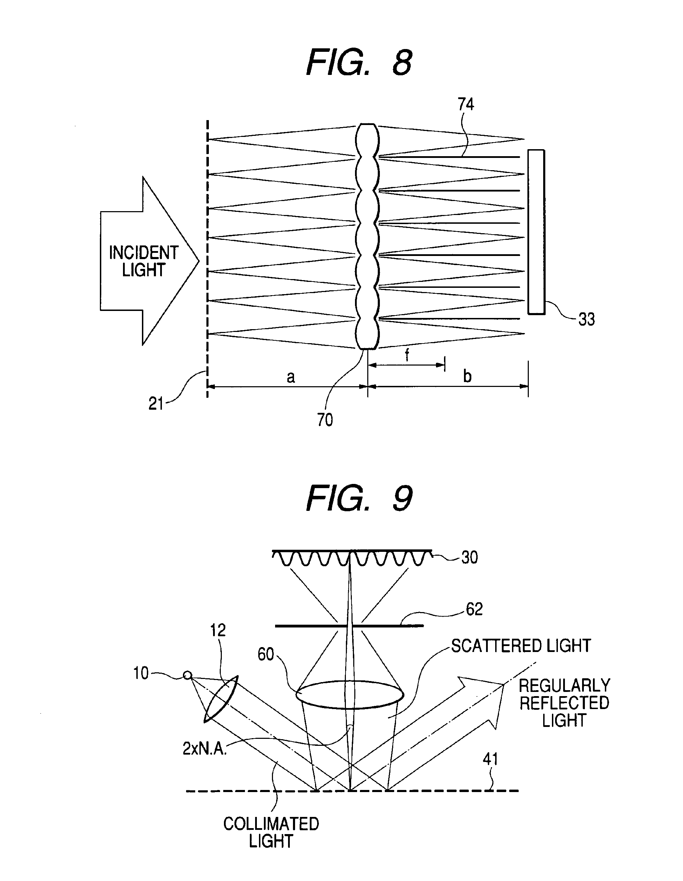

Further, when N.A. of the lens array 70 is small and the aperture is not needed, as in a sixth embodiment shown in Fig. 8, the aperture array can be omitted.

Further, although a description has been given of the transmission-type photoelectric encoder as described above, also in the reflection-type photoelectric encoder, basically the same structure is constructed as in a seventh embodiment shown in Fig. 9. According to an embodiment, collimated light is incident to a first grating 41 of a reflection-type main scale 40 from an oblique direction. Then, light restricted by the aperture 62, as a result, restricted by N.A. in light scattered at the first grating 41 is guided to the light receiving portion 30.

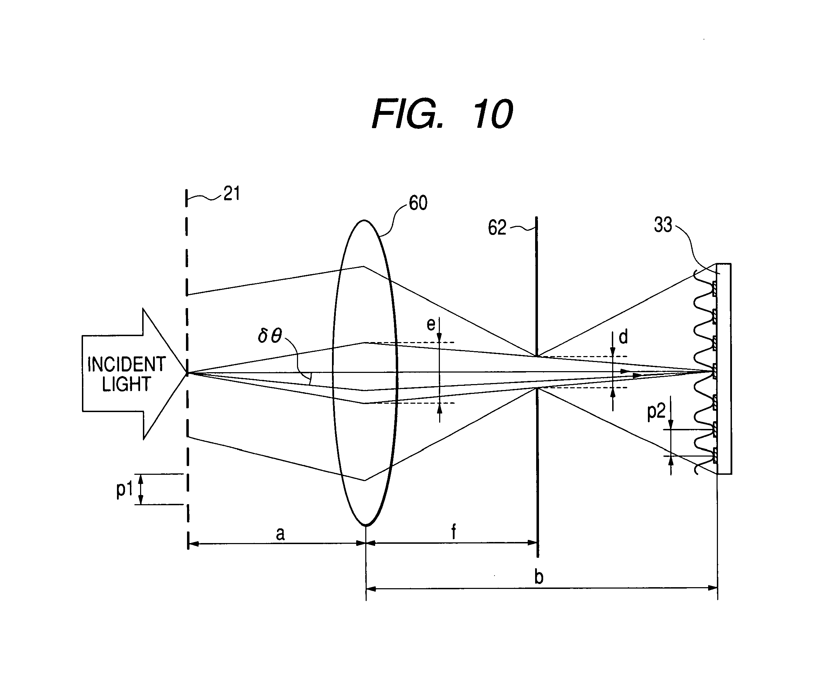

According to the optical system comprising the lens 60 opposed to the reflection-type main scale 40 as shown above, even when light emitted from a certain point on the main scale is shifted by a surface waviness of the main scale, as schematically shown in Fig. 10 as a transmission-type, the light is focused to a certainpoint by the lens 60. Therefore, an influence of the surface waviness is not effected when the surface waviness of the main scale is within ±N.A.

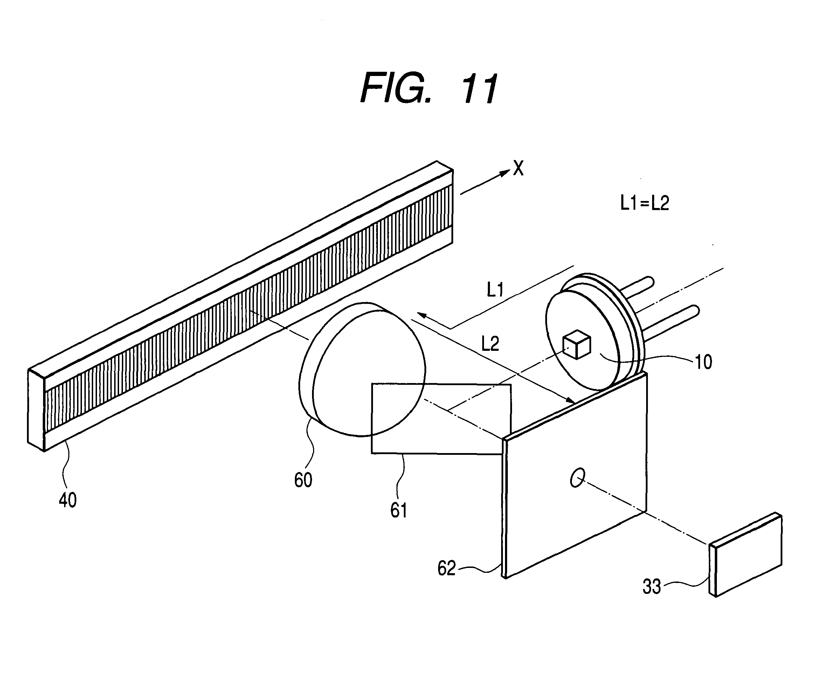

Further, Fig. 11 shows an embodiment arranging a diffused light source 11 at a focal point of the lens 60 serving also as a collimator lens. In Fig. 11, the diffused light source 11 is arranged at a position of the focal point of the lens 60 via a beam splitter 61. Therefore, light irradiated from the lens 60 to the main scale 40 becomes collimated light and light reflected at the first grating 41 of the main scale 40 is guided to the aperture 62 by passing the lens 60 and beam splitter 61. Both of the diffused light source 11 constituting a light emitting source and the aperture 62 are arranged at the position of the focal point of the lens 60 and therefore, light can effectively be utilized.

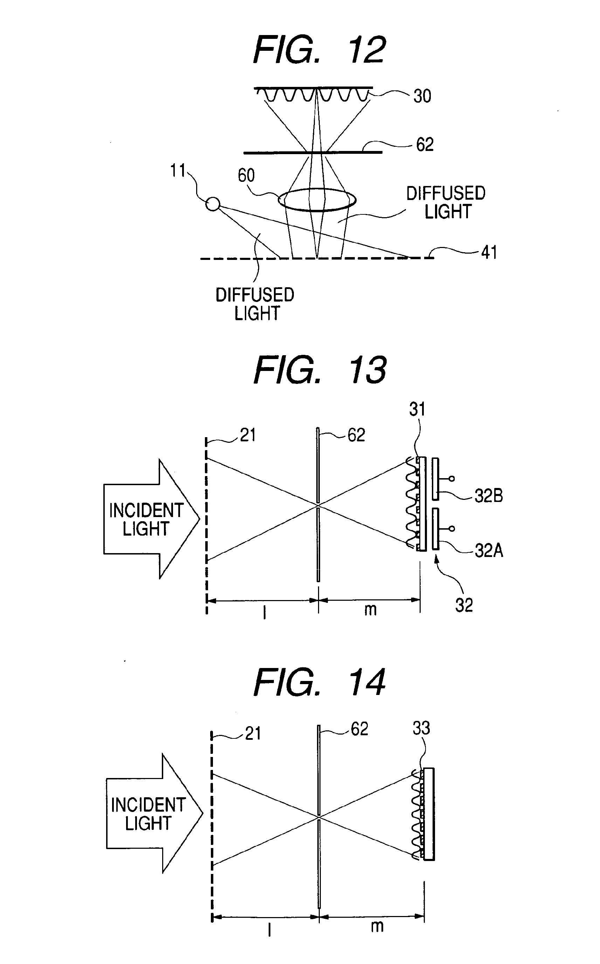

Fig. 12 shows an embodiment constituting a reflection-type photoelectric encoder and using the diffused light source 11. This embodiment is the same as the embodiment shown in Fig. 9 other than the light source and therefore, a detailed explanation thereof will be omitted.

Further, although according to all of the above-described embodiments, the lens is used, the lens can also be omitted.

Fig. 13 shows an embodiment using the index grating 31 and the receiving elements 32A, 32B at the light receiving portion and omitting the lens in the first embodiment (refer to Fig. 2).

Further, Fig. 14 shows an embodiment omitting the lens in the second embodiment (refer to Fig. 3) using the light receiving element array 33 at the light receiving portion.

A magnification M of the tenth and the eleventh embodiments omitting the lens is calculated by the following equation.

$$M=m/1 \qquad \cdots \quad (6)$$

Here, m, 1 designate distances between the aperture 62 and the first grating 21 and between the aperture 62 and the index grating 31.

According to the last two embodiments, a light amount is small.and thus, when a gap is varied, the magnification M of the image is varied. However, since the lens is not used, the cost can be reduced, further small-sized formation can be produced and the magnification can freely be set.

In the above-described embodiments, the embodiments using the aperture can provide a signal excellent in stability by reducing an influence of the variation in the gap. Further, when the variation in the gap is not problematic, the aperture can also be omitted as in the sixth embodiment.

**Claims**

1.  A photoelectric encoder comprising:

    a main scale (21) with a grating;
    a light receiving portion (30) with an index grating (31) and a light receiving element (32), the light receiving portion (30) capable move relative to the main scale (21), the light receiving portion (30) detecting a bright/dark pattern obtained at least by the grating of the main scale (21); and
    a lens (60) disposed between the main scale (21) and the light receiving portion (30),
    wherein a magnification of an image is set by adjusting distances among the lens (60), the main scale (21) and the light receiving portion (21), and **characterised in that**:

       the lens (60) is a lens array (70) comprising a plurality of lenses; and
       the photoelectric encoder further comprises:

          an aperture array (72) comprising a plurality of apertures disposed at a position of a focal point of the lens.

2.  The photoelectric encoder according to Claim 1, wherein the light receiving portion (30) is a light receiving element array (33) in which the index grating (31) and the light receiving portion (32) are integrated with each other.

3.  The photoelectric encoder according to Claim 1 or 2, further comprising:

    a partition plate (74) disposed between adjacent lenses of the lens array (70).

4.  The photoelectric encoder according to Claim 1, wherein the main scale (21) is of a reflection-type (41).

5.  The photoelectric encoder according to any of the preceding claims further comprising:

    a diffused light source (11),
    wherein the lens (60) serves also as a collimator lens.

6.  A photoelectric encoder comprising:

    a main scale (21) with a grating;
    a light receiving portion (30) with an index grating (31) and a light receiving element (32), the light receiving portion (30) capable move relative to the main scale (21), the light receiving portion (30) detecting a bright/dark pattern obtained at least by the grating of the main scale (21); and
    an aperture array (72) disposed between the main scale (21) and the light receiving portion (30), and **characterised in that** a magnification of an image is set by adjusting distances among the aperture array (72), the main scale (21) and the light receiving portion (30).

7.  The photoelectric encoder according to Claim 6, wherein the light receiving portion (30) is a light receiving element array (33) in which the index grating (31) and the light receiving portion (32) are integrated with each other.

**Patentansprüche**

1.  Photoelektrischer Codierer, der umfasst:

    eine Hauptskala (21) mit einem Gitter,
    einen Lichtempfangsteil (30) mit einem Indexgitter (31) und einem Lichtempfangselement (32), wobei sich der Lichtempfangsteil (30) relativ zu der Hauptskala (21) bewegen kann, wobei der Lichtempfangsteil (30) ein Hell/Dunkel-Muster erfasst, das wenigstens durch das Gitter der Hauptskala (21) erhalten wird, und
    eine Linse (60), die zwischen der Hauptskala (21) und dem Lichtempfangsteil (30) angeordnet ist,

wobei eine Vergrößerung des Bilds durch das Einstellen von Distanzen zwischen der Linse (60), der Hauptskala (21) und dem Lichtempfangsteil (21) gesetzt wird, **dadurch gekennzeichnet, dass**:

die Linse (60) ein Linsen-Array (70) ist, das eine Vielzahl von Linsen umfasst, und der photoelektrische Codierer weiterhin umfasst:

ein Öffnungs-Array (72), das eine Vielzahl von Öffnungen umfasst, die an einer Position eines Brennpunkts der Linse angeordnet sind,

2. Photoelektrischer Codierer nach Anspruch 1, wobei der Lichtempfangsteil (30) ein Lichtempfangselement-Array (33) ist, in dem das Indexgitter (31) und der Lichtempfangsteil (32) miteinander integriert sind.

3. Photoelektrischer Codierer nach Anspruch 1 oder 2, der weiterhin umfasst:

eine Trennplatte (74), die zwischen benachbarten Linsen des Linsen-Arrays (70) angeordnet ist.

4. Photoelektrischer Codierer nach Anspruch 1, wobei die Hauptskala (21) von einem reflektierenden Typ (41) ist.

5. Photoelektrischer Codierer nach einem der vorstehenden Ansprüche, der weiterhin umfasst:

eine gestreute Lichtquelle (11),
wobei die Linse (60) auch als eine Kollimatorlinse dient.

6. Photoelektrischer Codierer, der umfasst:

eine Hauptskala (21) mit einem Gitter,
einen Lichtempfangsteil (30) mit einem Indexgitter (31) und einem Lichtempfangselement (32), wobei sich der Lichtempfangsteil (30) relativ zu der Hauptskala (21) bewegen kann, wobei der Lichtempfangsteil (30) ein Hell/Dunkel-Muster erfasst, das wenigstens durch das Gitter der Hauptskala (21) erhalten wird, und
ein Öffnungs-Array (72), das zwischen der Hauptskala (21) und dem Lichtempfangsteil (30) angeordnet ist, **dadurch gekennzeichnet, dass** eine Vergrößerung eines Bilds gesetzt wird, indem Distanzen zwischen dem Öffnungs-Array (72), der Hauptskala (21) und dem Lichtempfangsteil (30) eingestellt werden.

7. Photoelektrischer Codierer nach Anspruch 6, wobei der Lichtempfangsteil (30) ein Lichtempfangselement-Array (33) ist, in dem das Indexgitter (31) und der Lichtempfangsteil (32) miteinander integriert sind.

## Revendications

1. Codeur photoélectrique comportant :

une échelle principale (21) comportant un réseau;
une partie réceptrice de lumière (30) comportant un réticule (31) et un élément récepteur de lumière (32), la partie réceptrice de lumière (30) pouvant se déplacer par rapport à l'échelle principale (21), la partie réceptrice de lumière (30) détectant un motif lumineux/sombre obtenu au moins par le réseau de l'échelle principale (21) ; et
une lentille (60) disposée entre l'échelle principale (21) et la partie réceptrice de lumière (30),
dans lequel un agrandissement d'une image est déterminé en réglant les distances entre la lentille (60), l'échelle principale (21) et la partie réceptrice de lumière (21), et **caractérisé en ce que** :

la lentille (60) est un réseau de lentilles (70) comportant une pluralité de lentilles ; et
le codeur photoélectrique comporte en outre :

un réseau d'ouvertures (72) comportant une pluralité d'ouvertures disposées à la position d'un point focal de la lentille.

2. Codeur photoélectrique selon la revendication 1, dans lequel la partie réceptrice de lumière (30) est un réseau d'éléments récepteurs de lumière (33) dans lequel le réticule (31) et la partie réceptrice de lumière (32) sont intégrés l'un à l'autre.

**3.** Codeur photoélectrique selon la revendication 1 ou 2, comportant en outre :

une plaque de partition (74) disposée entre des lentilles adjacentes du réseau de lentilles (70).

**4.** Codeur photoélectrique selon la revendication 1, dans lequel l'échelle principale (21) est du type à réflexion (41).

**5.** Codeur photoélectrique selon l'une quelconque des revendications précédentes comportant en outre :

une source de lumière diffuse (11),
dans lequel la lentille (60) est utilisée également en tant que lentille collimatrice.

**6.** Codeur photoélectrique comportant :

une échelle principale (21) comportant un réseau;
une partie réceptrice de lumière (30) comportant un réticule (31) et un élément récepteur de lumière (32), la partie réceptrice de lumière (30) pouvant se déplacer par rapport à l'échelle principale (21), la partie réceptrice de lumière (30) détectant un motif lumineux/sombre obtenu au moins par le réseau de l'échelle principale (21) ; et un réseau d'ouvertures (72) disposé entre l'échelle principale (21) et la partie réceptrice de lumière (30), et **caractérisé en ce qu'**un agrandissement d'une image est déterminé en réglant les distances entre le réseau d'ouvertures (72), l'échelle principale (21) et la partie réceptrice de lumière (30).

**7.** Codeur photoélectrique selon la revendication 6, dans lequel la partie réceptrice de lumière (30) est un réseau d'éléments récepteurs de lumière (33) dans lequel le réticule (31) et la partie réceptrice de lumière (32) sont intégrés l'un à l'autre.

9

# FIG. 1

EP 1 447 648 B1

*FIG. 2*

EP 1 447 648 B1

# FIG. 3

EP 1 447 648 B1

# FIG. 4

| OUTER DIAMETER Dls (mm) | EFFECTIVE FOCAL LENGTH EFL (mm) |
|---|---|
| 1.0 | 0.6 |
| 1.0 | 1.0 |
| 1.5 | 1.0 |
| 1.5 | 1.5 |
| 2.0 | 1.5 |
| 2.0 | 2.0 |
| 2.5 | 2.0 |
| 2.5 | 2.5 |
| 2.5 | 3.0 |
| 3.0 | 3.0 |
| 3.0 | 4.5 |
| 3.0 | 6.0 |
| 3.0 | 9.0 |
| 3.0 | 12.0 |
| 3.0 | 15.0 |
| 4.0 | 4.0 |
| 4.0 | 6.0 |
| 4.0 | 8.0 |
| 4.0 | 10.0 |
| 4.0 | 12.0 |
| 4.5 | 4.5 |
| 4.5 | 9.0 |
| 5.0 | 5.0 |
| 5.0 | 10.0 |
| 5.0 | 12.0 |
| 5.0 | 15.0 |
| 6.0 | 6.0 |
| 6.0 | 9.0 |
| 6.0 | 12.0 |
| 6.0 | 15.0 |
| 6.0 | 18.0 |
| 6.0 | 21.0 |
| 6.0 | 24.0 |
| 6.0 | 30.0 |
| 6.0 | 36.0 |
| 6.0 | 49.0 |
| 6.0 | 72.0 |
| 9.0 | 9.0 |
| 9.0 | 13.5 |
| 9.0 | 18.0 |
| 9.0 | 22.0 |
| 9.0 | 27.0 |
| 9.0 | 36.0 |
| 9.0 | 45.0 |

f VERSUS DIAMETER OF EDMOND LENS

# FIG. 5

INCIDENT
LIGHT

SIGNAL OUTPUT
(B PHASE)

SIGNAL OUTPUT
(A PHASE)

## FIG. 6

INCIDENT LIGHT

## FIG. 7

INCIDENT LIGHT

## FIG. 8

## FIG. 9

FIG. 10

EP 1 447 648 B1

FIG. 11

EP 1 447 648 B1

## FIG. 12

DIFFUSED
LIGHT

DIFFUSED
LIGHT

## FIG. 13

INCIDENT
LIGHT

## FIG. 14

INCIDENT
LIGHT

# FIG. 15

SIGNAL OUTPUT
(A PHASE)

SIGNAL OUTPUT
(B PHASE)

EP 1 447 648 B1

## FIG. 16

## FIG. 17

Acosθ    Asinθ

# FIG. 18

# FIG. 19

ERROR

SURFACE OF
MAIN SCALE

**EP 1 447 648 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2610624 B

- JP 60023282 B